# EUROPÄISCHE PATENTSCHRIFT

(11) **EP 0 842 831 B1**
(45) Veröffentlichungstag und Bekanntmachung des Hinweises auf die Patenterteilung: **19.09.2001**
(21) Anmeldenummer: 97120285.8
(22) Anmeldetag: 19.11.1997
(51) Int. Cl.: B60R 22/46

(54) **Sicherheitsgurtaufroller**
Safety belt reel
Enrouleur de ceinture de sécurité

(30) Priorität: 19.11.1996 DE 19647841
(43) Veröffentlichungstag der Anmeldung: 20.05.1998
(73) Patentinhaber: BREED AUTOMOTIVE TECHNOLOGY, INC., Lakeland, FL 33807-3050 (US)
(72) Erfinder: Specht, Martin, 82340 Feldafing (DE); Junker, Klaus, 82319 Starnberg (DE)
(74) Vertreter: Nöth, Heinz, Dipl.-Phys.

(56) Entgegenhaltungen:
- EP-A- 0 737 606

## Beschreibung

Die Erfindung betrifft einen Sicherheitsgurtaufroller, nach dem Oberbegriff des Patentanspruches 1.

Ein derartiger, aus der EP-A-0 737 606 bekannter Sicherheitsgurtaufroller besitzt einen Strafferantrieb, welcher zum Straffen des Sicherheitsgurtes in Gurtbandauszugsrichtung ein Drehmoment erzeugt. Zur Übertragung des Drehmomentes auf den auf einer Gurtspule aufgewickelten Sicherheitsgurt ist mit dem Strafferantrieb in Form einer Nabe ein Kraftübertragungselement verbunden. Ferner ist mit der Gurtspule drehfest in Form eines Ritzels ein Kraftübernahmeelement drehfest verbunden. Zwischen dem Kraftübertragungselement und dem Kraftübernahmeelement befindet sich eine mehrere Kupplungselemente aufweisende Kupplung, welche im eingerückten Zustand das Kraftübertragungselement und das Kraftübernahmeelement triebschlüssig zum Straffen des Sicherheitsgurtes verbindet. Die Kupplungselemente können nach dem Straffvorgang durch Auflaufen auf relativ zu Ihnen rotierende Steuerflächen in den ausgerückten Zustand gebracht werden.

Bei einem Unfall können auf den vorverlagerten Körper des mit dem gestrafften Sicherheitsgurt angegurteten Fahrzeuginsassen überhöhte Rückhaltekräfte einwirken. Hieraus ergibt sich ein Verletzungsrisiko an den Körperstellen an denen das Gurtband des Sicherheitsgurtes anlegt.

Aufgabe der Erfindung ist es, einen Sicherheitsgurtaufroller der eingangsgenannten Art zu schaffen, bei welchem überhöhte vom angelegten Sicherheitsgurt auf den vorverlagerten Körper des Fahrzeuginsassen einwirkende Rückhaltekräfte vermieden werden.

Die Aufgabe wird erfindungsgemäß durch die kennzeichnenden Merkmale des Patentanspruches 1 gelöst.

Hierzu besitzt die Gurtspule ein erstes mit dem Kraftübernahmeelement verbundenes Spulenteil, auf welches der Sicherheitsgurt aufgewickelt ist und ein zweites Spulenteil, welches am Gurtaufrollerrahmen gegen Drehung in Gurtbandauszugsrichtung, insbesondere bei einem Unfall blockierbar ist. Zwischen den beiden Spulenteilen befindet sich ein Lastbegrenzer für eine Lastbegrenzung bei überhöht beschleunigter Vorverlagerung des mit dem Sicherheitsgurt angeschnallten Fahrzeuginsassen. Bei der Aktivierung des Lastbegrenzers werden die Kupplungselemente durch eine Relativdrehung, welche das erste Spulenteil, gegenüber dem zweiten Spulenteil ausführt, in den ausgerückten Zustand bewegt.

In bevorzugter Weise ist der Kraftbegrenzer so ausgebildet, dass bei einem bestimmten Schwellenwert der Gurtbandauszugskraft, die durch den beschleunigt vorverlagerten Körper des Fahrzeuginsassen verursacht wird, die Kraftbegrenzungswirkung, d.h. eine Relativbewegung der Bauteile des Kraftbegrenzers gegeneinander mit Energieabsorption oder Energieumsetzung beginnt. Hierzu kann der Kraftbegrenzer in bevorzugter Weise so ausgebildet sein, wie es in der DE 196 40 842 A1 beschrieben ist.

In bevorzugter Weise können die Kupplungselemente bei ihrer Bewegung in Ausrückrichtung durch das zweite Spulenteil innerhalb einer bestimmten Wegstrecke im eingerückten Zustand gehalten werden. Hierdurch ist eine Ausführungsform dafür geschaffen, dass auch dann, wenn der Strafferbetrieb noch nicht beendet ist, die Kraftbegrenzungswirkung des Kraftbegrenzers zwischen den beiden noch in Gurtstrafferrichtung angetriebenen beiden Spulenteilen zur Wirkung kommt.

Das vom Strafferantrieb erzeugte Drehmoment kann über ein Kraftübertragungselement (Antriebsteil) auf die Kupplungselemente übertragen werden, die im eingerückten Zustand in ein Kraftübernahmeelement (Abtriebsteil) kraftschlüssig eingreifen, das mit dem ersten Spulenteil, auf welches der Sicherheitsgurt aufgewickelt ist, drehfest verbunden ist. Im ausgerückten Zustand werden die Kupplungselemente aus dem kraftschlüssigen Eingriff mit dem Kraftübernahmeelement entfernt. Hierdurch wird ein Abtrennen des Lastbegrenzers und der angetriebenen Spule, insbesondere des ersten Spulenteils, auf welches der Sicherheitsgurt aufgewickelt ist, vom Strafferantrieb erreicht. Auch das zweite Spulenteil ist vom Strafferantrieb gelöst und wird beispielsweise durch eine am Aufrollerrahmen abgestützte Klinke gegen Drehung in Gurtbandabzugsrichtung blockiert. Der Kraftbegrenzer wird dann zwischen dem gegen Drehung in Gurtbandabzugsrichtung blockierten Spulenteil und dem Spulenteil, auf welches der Sicherheitsgurt aufgewickelt ist, wie es beispielsweise in der DE 196 40 842 A1 beschrieben ist, wirksam.

Bei weiteren Ausführungsbeispielen können die Kupplungselemente so weit bewegt werden, daß sie auch außer Eingriff mit dem Kraftübertragungselement, welches das Drehmoment des Strafferantriebs überträgt, kommen. Hierdurch kann erreicht werden, daß nach dem Abbau aller auf den Körper des Fahrzeuginsassen einwirkenden und durch einen Unfall verursachten Kräfte unabhängig vom Zustand des Straffers durch selbsttätiges Lösen der Blockierung des zweiten Spulenteils, beispielsweise durch Federkraft, die Wickelwelle frei drehbar wird und das Gurtband vom Körper des Fahrzeuginsassen leicht gelöst werden kann.

In bevorzugter Weise befinden sich die Kupplungselemente auch im Normalbetrieb des Gurtaufrollers in eingerücktem Zustand. Hierdurch wird der Gurtaufroller in ständiger Bereitschaft für die Übertragung des vom Strafferantrieb erzeugten Drehmoments gehalten.

Anhand der Figuren wird an Ausführungsbeispielen die Erfindung noch näher erläutert. Es zeigt:
- Fig. 1:: einen Längsschnitt durch ein Ausführungsbeispiel;
- Fig. 2:: einen Schnitt senkrecht zur Wickelwellenachse, bei welchem sich ein erstes Ausführungsbeispiel der Kupplung im Normalbetrieb oder im Strafferbetrieb befindet;
- Fig. 3:: den gleichen Schnitt wie in Fig. 2, wobei die Kupplung sich am Beginn der Vorverlagerung des Fahrzeuginsassen und somit bei Beginn der Lastbegrenzungswirkung befindet;
- Fig. 4:: den gleichen Schnitt wie in den Figuren 2 und 3, wobei die Kupplung sich im ausgerückten Zustand während der Lastbegrenzungswirkung des Lastbegrenzers befindet;
- Fig. 5:: ein weiteres Ausführungsbeispiel der Erfindung;
- Fig. 6-14:: verschiedene Betriebsstellungen eines dritten Ausführungsbeispiels einer Kupplung;
- Fig. 15:: in perspektivischer auseinandergezogener Stellung ein Kupplungsring und ein zweites Spulenteil eines vierten Ausführungsbeispiels einer Kupplung;
- Fig. 16:: das Ausführungsbeispiel der Fig. 15 in perspektivischer Darstellung in anderer Richtung gesehen; und
- Fig. 17-19:: verschiedene Betriebsstellungen des in den Figuren 15 und 16 dargestellten Ausführungsbeispiels.

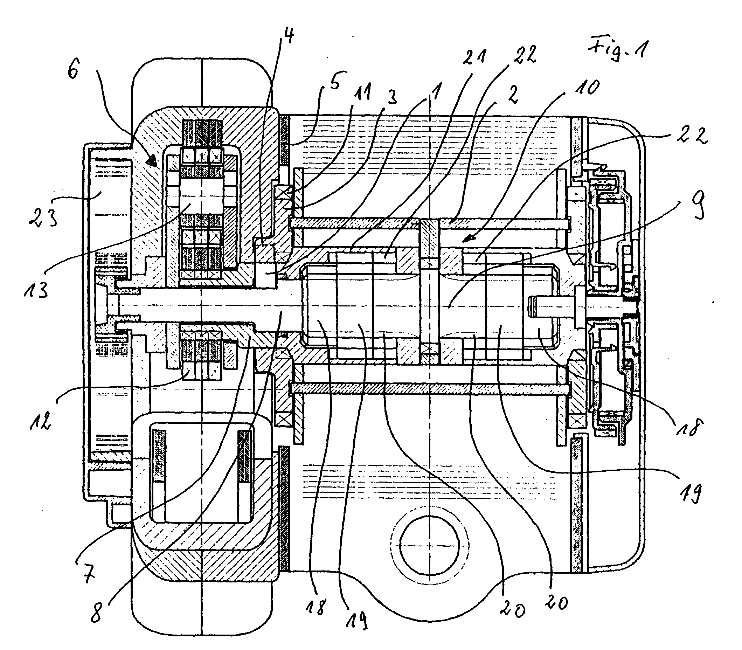

Der in der Fig. 1 dargestellte Sicherheitsgurtaufroller besitzt eine Gurtspule, welche aus zwei Teilen, nämlich ein erstes Spulenteil 2 und ein zweites Spulenteil 3, besteht. Auf das erste Spulenteil 2 sind die Gurtbandlagen des Sicherheitsgurtes aufgewickelt. Das zweite Spulenteil 3 ist im wesentlichen scheibenförmig ausgebildet und besitzt an seinem Außenumfang eine Blockierverzahnung 11. Im Normalbetrieb sind die beiden Spulenteile 2 und 3 über einen Lastbegrenzer 10 drehfest miteinander verbunden, wie es in der DE 196 40 842 A1 beschrieben ist. An beiden Stirnseiten der Gurtspule sind Spulenteile 3 mit den Außenverzahnungen 11 vorgesehen.

An der Federseite des Gurtaufrollers befindet sich ein Strafferantrieb 6. Dieser Strafferantrieb 6 kann so ausgebildet sein, wie es in der DE 196 21 772 C1 beschrieben ist. Das vom Strafferantrieb 6 erzeugte Drehmoment wird auf ein Kraftübertragungselement 7, welches beim Ausführungsbeispiel hülsenförmig ausgebildet ist, übertragen. Hierzu sitzt auf dem Kraftübertragungselement 7 ein Sonnenrad 12, in dessen Außenverzahnung ein Planetenrad 13 beim Antrieb eingreift.

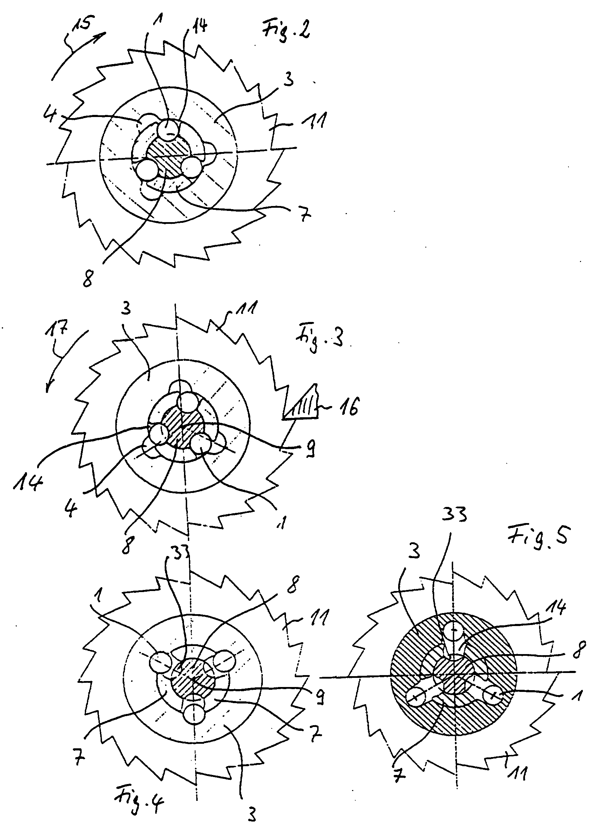

Das Kraftübertragungselement 7 ist Teil einer Kupplung und bildet in dieser Kupplung das Antriebsglied. Wie aus den Figuren 2 bis 14 zu ersehen ist, befinden sich in Ausnehmungen 14 des Kraftübertragungselementes 7 Kupplungselemente 1, welche als Wälzkörper, insbesondere Zylinderrollen, ausgebildet sind.

Zur Drehmomentübertragung auf die Gurtspule, insbesondere auf das erste Spulenteil 2, auf welches das Gurtband des Sicherheitsgurtes aufgewickelt ist, greifen im Strafferbetrieb die Kupplungselemente 1 in entsprechende Ausnehmungen 33 eines Kraftübernahmeelements 8, welches in der Kupplung das Abtriebsglied bildet. Das Kraftübernahmeelement 8 ist als Lagerwelle ausgebildet, auf welcher das Kraftübertragungselement 7 und, wie in der DE 196 40 842 A1 beschrieben, der Lastbegrenzer 10 und die Gurtspule mit ihren beiden Spulenteilen 2 und 3 gelagert sind. Im normalen Gurtaufrollerbetrieb beim Anlegen und Abnehmen des Sicherheitsgurtes befinden sich die Kupplungselemente 1 im eingerückten Zustand, so daß das Kraftübertragungselement 7 sich mit der Gurtspule mitdreht. Durch die Kraft einer Triebfeder 23, welche an einer wellenförmigen Verlängerung des Kraftübernahmeelementes 8 (Lagerwelle) angreift, wird auf die Gurtspule zum Aufwickeln des Sicherheitsgurtes ein Drehmoment übertragen. Das Abziehen des Sicherheitsgurtes erfolgt gegen die Rückzugskraft der Triebfeder 23. Zwischen dem Sonnenrad 12 und dem Kraftübertragungselement 7 kann eine nicht näher dargestellte Kupplung vorgesehen sein, die dann eingerückt wird, wenn ein Drehmoment vom Strafferantrieb 6 erzeugt wird. Es ist jedoch auch möglich, das Planetenrad 13 außer Eingriff mit dem Sonnenrad 12 im normalen Gurtaufrollerbetrieb zu halten. Erst dann, wenn vom Strafferantrieb 6 eine Antriebskraft erzeugt wird, kommt das Planetenrad 13 mit dem Sonnenrad 12 in Eingriff so daß am Kraftübertragungselement 7 ein Drehmoment erzeugt wird.

Während des Straffens wird dieses Drehmoment über die Kupplungselemente 1 auf das als Abtriebsglied wirkende Kraftübemahmeelement 8 übertragen. Da das wellenförmig ausgebildete Kraftübemahmeelement 8 drehfest mit den beiden Spulenteilen 2 und 3 verbunden ist, wird die Gurtspule in Aufwickelrichtung aufgewickelt und der Sicherheitsgurt am Körper des Fahrzeuginsassen gestrafft. Die Drehrichtung beim Straffen ist in den Fig. 2, 6 und 8 durch Pfeile 15 mit Drehrichtung im Uhrzeigersinn gekennzeichnet.

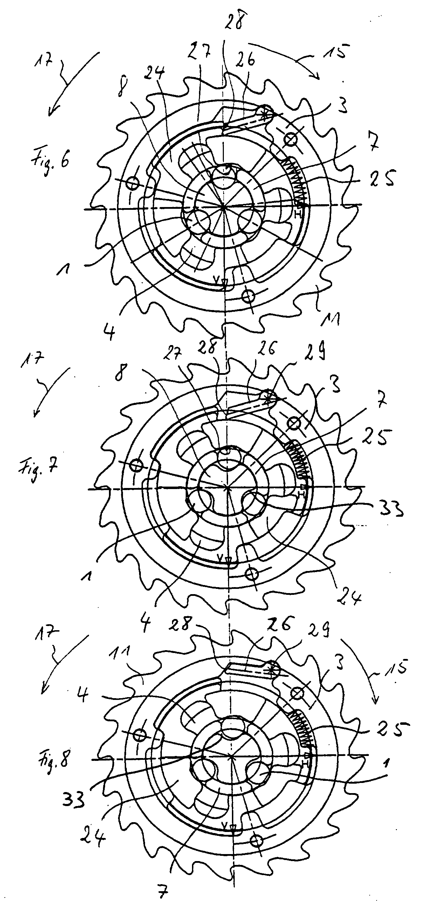

Falls der Strafferantrieb 6 aufgrund des Ansprechens eines Sensors rechtzeitig gezündet wurde, ist der Vorgang des Gurtstraffens, noch bevor der Körper des Fahrzeuginsassen nach vorne verlagert wird, beendet. Wenn jedoch beispielsweise aufgrund eines relativ späten Ansprechens der Sensorik der Strafferantrieb zu spät gezündet wird, kann es geschehen, daß der Körper des Fahrzeuginsassen noch während des Gurtstraffens nach vorne verlagert wird. Für beide Fälle sind die Ausführungsbeispiele der Kupplung so ausgestaltet, daß sie eine durch den Lastbegrenzer 10 vermittelte Lastbegrenzung zulassen. Wie aus den Figuren 2 und 3 und den Bewegungsabläufen der Figuren 6 bis 13 zu ersehen ist, legen die Kupplungselemente 1 eine bestimmte Wegstrecke während der Relativdrehung des Kraftübernahmeelementes 8 gegenüber dem zweiten Spulenteil 3 entgegen dem Uhrzeigersinn (Pfeil 17) zurück, bis sie in die Ausrückposition an den Ausnehmungen 4 im zweiten Spulenteil 3 gelangen. Hierdurch ist auch während des Straffens eine Lastbegrenzung ermöglicht.

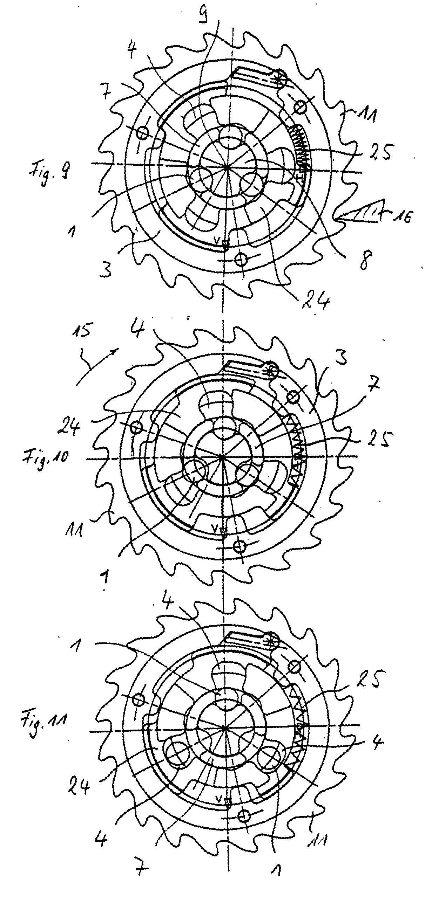

Am Ende des Straffens des Sicherheitsgurtes kommt die Gurtspule zum Stehen, wobei eine Blockierklinke 16 mit der Blockierverzahnung 11 des zweiten Spulenteiles 3 in Eingriff kommt (Fig. 3 und Fig. 9). Die Blockierklinke 16 liegt beim Strafferbetrieb ratschend auf der Blockierverzahnung 11 auf und kann fahrzeugsensitiv ausgelöst werden. Die Blockierverzahnung 11 ist so gestaltet, daß ein Drehen in entgegengesetzter Richtung, d.h. in Gurtbandabzugsrichtung verhindert wird, wenn die Blockierklinke 16 in die Verzahnung 11 eingreift. Bei der Vorverlagerung des Körpers des Fahrzeuginsassen wird über den Sicherheitsgurt auf das erste Spulenteil 2 eine Kraft in Gurtbandauszugsrichtung ausgeübt, so daß das Kraftübernahmeelement 8 und das über die Kupplungselemente 1 damit gekoppelte Kraftübertragungselement 7 in Gurtbandabzugsrichtung (Pfeil 17) gegenüber dem am Aufrollerrahmen 5 durch die Blockierklinke 16 in Gurtbandabzugsrichtung blockierten Spulenteil 3 verdreht werden. Dabei werden die Kupplungselemente 1 zu den Ausnehmungen 4 im zweiten Spulenteil 3 bewegt und werden bezüglich der Spulenachse 9 radial nach außen in diese Ausnehmungen 4 ausgerückt. Die Kupplungselemente 1 sind dann außer Eingriff mit den von der Lagerwelle gebildeten Kraftübernahmeelement 8. Dieser ausgerückte Zustand ist in der Fig. 4 und 14 dargestellt.

Wie es in der DE 196 40 842 A1 beschrieben ist, besteht der Lastbegrenzer 10 aus zwei Muttempaaren 18, 19, die auf gegenläufigen Gewinden 20 am Kraftübemahmeelement 8 (Lagerwelle) geführt sind. Außen greifen die Muttempaare 18 und 19 in Führungshülsen 21, welche drehfest mit dem am Aufrollerrahmen 5 blokkierten zweiten Spulenteil 3 verbunden sind. Die Führungshülsen 21 besitzen in axialer Richtung sich erstreckende Führungsschlitze 22, in die die Mutternpaare 18, 19 eingreifen. Bei der Drehung des ersten Spulenteils 2 und des drehfest damit verbundenen Kraftübernahmeelements 8 (Lagerwelle) werden die Mutternpaare auf den gegenläufigen Gewinden 20 axial aufeinander zu bewegt, wobei Energie (Reibungsenergie) verbraucht wird. Einzelheiten des Lastbegrenzers sind in der DE 196 40 842 A1 beschrieben. Hierdurch wird ein gebremstes Abziehen des Sicherheitsgurtes vom ersten Spulenteil 2 erreicht. Hieraus resultiert eine Lastbegrenzung für den vorverlagerten Körper des mit dem Sicherheitsgurt angeschnallten Fahrzeuginsassen. Aufgrund der Wirkung der in den Ausführungsbeispielen dargestellten Kupplungen ist bei einsetzender Kraftbewegung der Strafferantrieb vom Gurtaufroller getrennt. Die Kraftbegrenzerkennlinie wird daher vom Strafferantrieb nicht beeinfllußt. Sobald keine vom Unfallgeschehen verursachten Kräfte im Gurtaufroller mehr existieren, kommt die Blokkierklinke 16 selbsttätig, beispielsweise durch eine Rückstellfederkraft außer Eingriff mit der Blockierverzahnung 11. Der Sicherheitsgurt kann vom Körper des Fahrzeuginsassen gelöst werden.

In der Fig. 5 ist eine zusätzliche Maßnahme zur Wiederherstellung der ursprünglichen Funktionen des Gurtaufrollers nach dem Unfallgeschehen gezeigt. Bei diesem Ausführungsbeispiel sind die Ausnehmungen 4 im zweiten Spulenteil 3 so bemessen, daß die Kupplungselemente 1 auch vom Eingriff mit dem Kraftübertragungselement 7 gelöst sind. Die Gurtspule (Spulenteil 2 und Spulenteil 3 sowie Lastbegrenzer 10) können in Gurtbandabzugsrichtung und Gurtbandaufwickelrichtung gedreht werden, wobei auch die Triebfeder 23 in Aufwickelrichtung ein Drehmoment für die Gurtspule liefert.

Auch beim Ausführungsbeispiel der Figuren 6 bis 14 ist eine öffnende Kupplung vorgesehen, welche nach dem Straffen und der Kraftbegrenzungsfunktion die Rollfähigkeit des Gurtaufrollers, d.h. den normalen Gurtaufrollerbetrieb, gewährleistet. Zur Erläuterung des Ausführungsbeispiels der Kupplung sind in den Figuren 6 bis 14 die verschiedenen Betriebszustände der Kupplung dargestellt. In der Figur 6 ist der Betriebszustand bei normalem Gurtaufrollerbetrieb gezeigt. Die Kupplung besitzt als zusätzliche Elemente einen Kupplungsring 24, der drehbar am zweiten Spulenteil 3 um die Spulenachse 9 gelagert ist. Im Kupplungsring 24 sind die Ausnehmungen 4 vorgesehen, in welche die Kupplungselemente 1 zum Öffnen der Kupplung, wie im einzelnen noch erläutert wird, bewegt werden können. Der Kupplungsring 24 wird in der in der Fig. 6 dargestellten Normalposition durch eine am zweiten Spulenteil 3 abgestützte Kupplungsfeder 25 und einen schwenkbar ebenfalls am zweiten Spulenteil 3 abgestützten Kupplungshebel 26 gehalten. Die Wirkrichtung der Kupplungsfeder 25 ist beim dargestellten Ausführungsbeispiel im Uhrzeigersinn gerichtet und drückt den Kupplungsring 24 gegen einen am freien Ende des Kupplungshebels vorgesehenen Anschlag 28.

Beim Beginn des Straffens (Fig. 7) wird, wie im Zusammenhang mit den Ausführungseispielen der Figuren 2 bis 5 schon erläutert wurde, das zweite Spulenteil 3 und das Kraftübernahmeelement 8 vom Kraftübertragungselement 7 und den Kupplungselementen 1 in Straffrichtung (Uhrzeigersinn) 15 drehangetrieben. Am Kupplungsring 24 sind den jeweiligen Kupplungselementen zugeordnete Konturen 27 vorgesehen. Die Kupplungselemente 1 wirken über die jeweiligen Konturen 27 beim Strafferantrieb in der Weise auf den Kupplungsring 24, daß dieser entgegen dem Uhrzeigersinn, d.h. entgegen der Straff richtung 15 in Richtung des Pfeiles 17 relativ gegenüber dem zweiten Spulenteil 3 bewegt wird. Hierdurch wird der Kupplungsring 24 vom Anschlag 28 am Kupplungshebel 26 wegbewegt, wie es in der Fig. 7 dargestellt ist.

Bei dem weiteren Drehantrieb, der durch den Strafferantrieb 6 vermittelt wird, wirkt auf den Kupplungshebel 26 eine Fliehkraft, so daß der Kupplungshebel 26 um seine Schwenkachse 29 in die in der Fig. 8 dargestellte Position radial nach außen verschwenkt wird. In dieser Position kann der Kupplungshebel 26 gegebenenfalls durch eine nicht näher dargestellte Sicherungsscheibe gehalten werden, welche in der Ausnehmung, in welcher der Kupplungshebel 26 am zweiten Spulenteil 3 gelagert ist, vorgesehen sein kann.

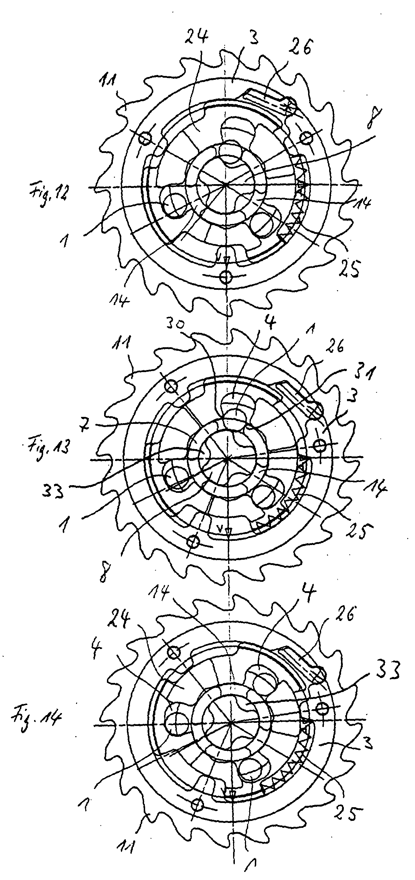

Nach dem Straffvorgang wird durch die vom gestrafften Gurtband während der Vorverlagerung des angegurteten Fahrzeuginsassen mit Kraftbegrenzerwirkung ausgeübte Reaktionskraft der Kupplungsring 24 aufgrund des Eingriffes der Kupplungselemente 1 in die jeweiligen Konturen 27 zunächst noch in seiner Position gehalten. Bei sich vermindernder Gurtbandreaktionskraft bewirkt die von der Triebfeder 23 auf das Kraftübernahmeelement 8 ausgeübte Rückzugskraft, welche die gleiche Richtung hat wie die Straffrichtung 15, daß die Kupplungselemente 1 in den Ausnehmungen des Kraftübernahmeelements 7 zurückbewegt werden, so daß kein Eingriff mehr mit dem Kupplungsring 24 besteht (Fig. 9). Dadurch wird der Kupplungsring 24 frei, so daß durch die Kraft der Kupplungsfeder 25 der Kupplungsring 24 im Uhrzeigersinn (Fig. 10) um die Spulenachse 9 so weit gedreht wird, bis die Ausnehmungen 4 im Kupplungsring 24 den Kupplungselementen 1 gegenüber liegen. Die Kupplungselemente fallen durch Schwerkraftwirkung teilweise in die Ausnehmungen 4 des Kupplungsringes 24. Bei der in der Fig. 11 dargestellten Betriebsstellung fallen zwei Kupplungselemente 1 in die Ausnehmungen 4. Das bezüglich der Spulenachse 9 oben liegende Kupplungselement wird aufgrund der Kraft der Rückzugsfeder 23, welche auf das Kraftübernahmeelement 8 wirkt, wie im folgenden erläutert, in die zugeordnete Ausnehmung 4 des Kupplungsringes 24 zwangsgeführt. Wenn zwei Kupplungselemente oberhalb der Spulenachse liegen, erfolgt die Zwangsführung für jedes der beiden Kupplungselemente.

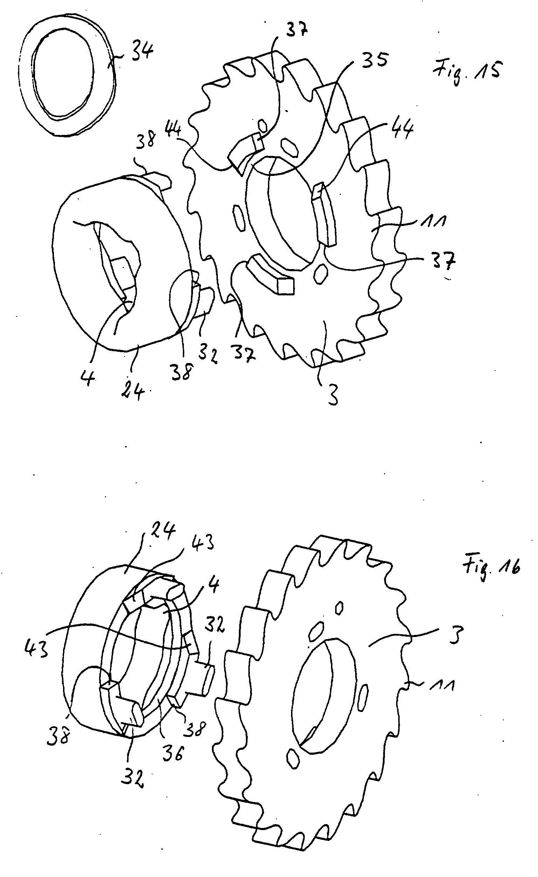

Durch die Triebfeder 23 wirkt im Uhrzeigersinn eine Kraft auf das Kraftübernahmeelement 8. Das Kraftübertragungselement 7 ist nach Beendigung des Straffervorgangs gegen eine weitere Drehung blockiert. Hierdurch wird, wie es in der Fig. 12 gezeigt ist, das Kupplungselement 1 aus der Ausnehmung im Kraftübernahmeelement 8 radial nach außen bewegt (Fig. 12). Diese Bewegung erfolgt so weit, daß das Kupplungselement 1 praktisch ganz aus der Ausnehmung in dem Kraftübernahmeelement 8 radial nach außen bewegt wird, so daß das Kupplungselement 1 in die in der Fig. 13 dargestellte Position kommt. In dieser Position greift eine Kraftübertragungsstelle 30 am Kupplungselement 1 an. Das Kupplungselement 1 ist ferner an einer Abstützstelle 31 des gegen Drehung blockierten Kraftübertragungselements 7 abgestützt. Die Abstützstelle 31 kann von einem Begrenzungsrand der Ausnehmung 14 im Kraftübertragungselement 7 gebildet werden. In der in der Fig. 13 dargestellten Position ist das Kupplungselement 1 soweit radial nach außen verschoben, daß der Mittelpunkt seines kreisförmigen Querschnitts außerhalb der Verbindungslinie zwischen der Kraftübertragungsstelle 30 und der Abstützstelle 31 liegt. Durch die von der Kupplungsfeder 25 auf den Kupplungsring 24 und damit auf das Kupplungselement 1 an der Kraftübertragungsstelle 30 ausgeübten Kraft wird das Kupplungselement 1 in die Ausnehmung 4 bewegt und nimmt die in der Fig. 14 dargestellte endgültige Position ein.

Wie aus der Fig. 14 zu ersehen ist, wird durch die Kraft der Kupplungsfeder 25 der Kupplungsring 24 im Uhrzeigersinn so weit verdreht, daß die Ausnehmungen 4 durch das gegen Drehung blockierte Kraftübertragungselement 7 so weit abgedeckt sind, daß die Kupplungselemente 1 nicht mehr in ihre Kupplungspositionen zurückkehren können. Die Kupplungselemente 1 werden vielmehr in den Ausnehmungen 4 des Kupplungsringes 24 in der ausgrückten Position gehalten. Hierdurch wird gewährleistet, daß die Gurtaufrollerteile nach dem Lösen der Blockierklinke 16 wieder wie im Normalbetrieb rollfähig sind, d.h. die Wickelwelle, bestehend aus den beiden Spulenteilen 2 und 3, können unbehindert in beide Richtungen für das Aufwickeln und Abwickeln des Gurtbandes gedreht werden. Die Kupplungselemente 1, der Kupplungsring 24 und das mit der Triebfeder 23 verbundene Kraftübernahmeelement 8 drehen mit. Wenn eines oder mehrere der Kupplungselemente 1 dabei in eine der Fig. 13 entsprechende Position kommen, erfolgt die Verlagerung des jeweiligen Kupplungselementes in die zugeordnete Ausnehmung 4 in der Weise, wie es im Zusammenhang mit der Fig. 13 oben erläutert wurde.

Die in der Fig. 14 dargestellte endgültige Öffnungsstellung der Kupplung kann dann erzielt werden, wenn das Gurtschloß des Sicherheitsgurtes gelöst wird, so daß die Rückstellkraft der Triebfeder 23 voll zur Einwirkung auf die drehbaren Teile des Gurtaufrollers, insbesondere auf das Kraftübernahmeelement 8, zur Einwirkung kommen kann. In dieser geöffneten Stellung der Kupplung ist der Strafferantrieb und auch der Kraftbegrenzer vollständig von drehbaren Teilen des Gurtaufrollers gelöst.

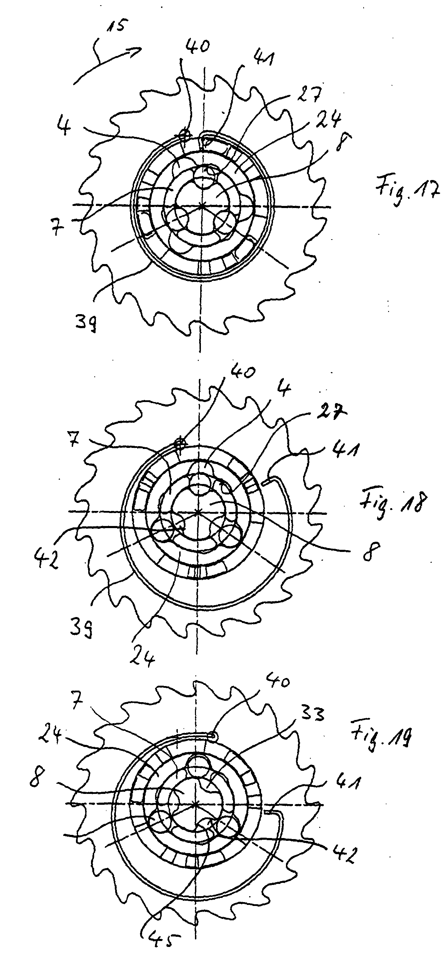

Bei dem in den Figuren 15 bis 19 dargestellten Ausführungsbeispiel sind im Normalbetrieb der Kupplungsring 24 und das zweite Spulenteil 3, welches die Verzahnung 11 trägt, über Abreißstife 32 starr und drehfest in beiden Drehrichtungen miteinander verbunden. Die einzelnen Elemente der Kupplung nehmen die in der Fig. 17 dargestellten Positionen ein. Diese Positionen entsprechen denen, welche den Positionen der Fig. 6 des vorher beschriebenen Ausführungsbeispiels entsprechen. Beim Beginn des Straffvorganges wird, wie im Zusammenhang mit der Fig. 7 schon erläutert, aufgrund der Kontur 27, an welcher die Kupplungselemente 1 beim Beginn der Drehung in Straffrichtung abrollen, bewirkt, daß der Kupplungsring 24 entgegen der Straffrichtung gegenüber dem zweiten Spulenteil 3 gedreht wird. Durch diese Relativverdrehung wird die starre Verbindung zwischen dem Kupplungsring 24 und dem Spulenteil 3 durch Trennen der Abreißstifte 32 aufgehoben. Während des weiteren Straffvorgangs kommen jedoch sich überdeckende Anschläge 37 und 38 am zweiten Spulenteil 3 und am Kupplungsring 24 in Anlage, so daß in Straffrichtung (Pfeil 15) zwischen dem zweiten Spulenteil 3 und dem Kupplungsring 24 die Drehverbindung aufrecht erhalten bleibt.

Nach dem Straffen ist das Kraftübertragungselement 7 gegen weitere Drehung blockiert, während das Kraftübernahmeelement 8 aufgrund der Wirkung der Triebfeder 23 sich in Straffrichtung (Pfeil 15) weiterdreht. Hierdurch kommen, wie anhand der Figur schon erläutert, die Kupplungselemente 1 wieder an die jeweiligen Anstiegsflanken in den Ausnehmungen 33 zurück, an welchen sie während des Normalbetriebs (Figuren 6 bzw. 17) angelegen sind. Da nach dem Straffen der Kupplungsring 24 lastfrei ist, wirkt sich die Kraft einer Feder 39, welche gegebenenfalls während des Straffvorgangs noch in Straffrichtung vorgespannt worden ist, aus. Diese Feder greift an einem Federangriffspunkt 40 am zweiten Spulenteil 3 an. An einem zweiten Federangriffspunkt 41 greift die Feder am Kupplungsring 24 an. Durch die Feder 39 wird der Kupplungsring in die in der Fig. 18 dargestellte Position gedreht. In dieser Position sind die Ausnehmungen 4 im Kupplungsring 24 in radialer Richtung ausgerichtet mit den Kupplungselementen 1, welche sich in den Ausnehmungen 33 des Kraftübernahmeelements 8 befinden. Bei der weiteren Relativverdrehung des Kraftübernahmeelements 8 gegenüber dem Kraftübertragungselement 7 werden die Kupplungselemente 1 durch Schwerkraft bzw. durch die seitlich ansteigenden Flanken 42 in den Ausnehmungen 33 des Kraftübernahmeelements 33 in eine solche Stellung gebracht, daß sie, wie anhand der Figuren 12 und 13 des vorherigen Ausführungsbeispiels bereits erläutert, in die Ausnehmungen 4 des Kupplungsringes 24 und damit in die ausgerückten Positionen gebracht werden (Fig. 19).

Während der Kraftbegrenzerwirkung wird über Zwangsöffnungskonturen 43 und 44 am Kupplungsring 24 und am zweiten Spulenteil 3 eine axiale Verschiebung zwischen dem zweiten Spulenteil 3 und dem Kupplungsring 24 bewirkt. Beim dargestellten Ausführungsbeispiel sind die Zwangsöffnungskonturen 43 und 44 als aneinander liegende schräge Flächen ausgebildet. Beim Ausführungseispiel wird der Kupplungsring 24 in axialer Richtung von dem zweiten Spulenteil 3 wegbewegt. Hierdurch wird gewährleistet, daß bei Einsetzen der Kraftbegrenzung der Strafferantrieb von den Teilen des Gurtaufrollers, insbesondere den Teilen, welche bei der Kraftbegrenzung wirksam sind, abgetrennt ist. Hierdurch erfolgt die Kraftbegrenzung unbeeinflußt vom Strafferantrieb. Zusätzlich kann eine Feder, insbesondere Tellerfeder 34, zwischen dem zweiten Spulenteil 3 und dem Kupplungsring 24 vorgesehen sein. Die Tellerfeder 34 (Fig. 15) liegt dabei an einem Bund 35 am zweiten Spulenteil 3 und an einem Bund 36 am Kupplungsring 24 an.

Nach Beendung der Kraftbegrenzungsfunktion besitzt der Gurtaufroller normale Automatenrollfunktion, d.h. die Gurtspule kann unbehindert gegenüber dem Gurtaufrollerrahmen in beiden Richtungen gedreht werden, wobei, wie im normalen Aufrollerbetrieb, die Triebfeder 23 über das Kraftübernahmeelement ihre Rückzugswirkung beim Aufwickeln des Gurtbandes auf die Gurtspule ausübt. Diese normale Rollfunktion des Gurtaufrollers wird dadurch gewährleistet, daß das nach dem Straffen blockierte Kraftübertragungselement 7 und der Kupplungsring 3 einen blockierten Verbund bilden, wobei die Ausnehmungen 14 im Kraftübertragungselement 7 und die Ausnehmungen 4 im Kupplungsring 24 in radialer Richtung ausgerichtet bleiben. Wenn während der Drehung des Kraftübernahmeelementes 8 beim normalen Aufrollerbetrieb die Kupplungselemente 1 in die Ausnehmungen 33 fallen, werden sie bei der Weiterdrehung aufgrund der seitlichen Flanken 42 und 45 der Ausnehmungen 33 in eine solche Lage gebracht, daß sie wieder in die ausgerückte in den Ausnehmungen 4 befindlichen Positionen verschoben werden (Fig. 19). Dieser Vorgang erfolgt sowohl in Aufwickelrichtung als auch in Gurtbandauszugsrichtung, d.h. in beiden Drehrichtungen des Kraftübernahmeelements 8.

## Patentansprüche

1. Sicherheitsgurtaufroller, mit
- einer an einem Gurtaufrollerrahmen (5) drehbar gelagerten Gurtspule, auf welche ein Sicherheitsgurt aufwickelbar ist;
- einem Strafferantrieb (6), welcher ein Drehmoment erzeugt;
- einem mit dem Strafferantrieb (6) verbundenen Kraftübertragungselement (7);
- einem mit der Gurtspule drehfest verbundenen Kraftübernahmeelement (8);
- einer Kupplungselemente (1) aufweisenden Kupplung, welche bei einem vom Strafferantrieb (6) erzeugten Drehmoment in den eingerückten Zustand gesteuert ist, wobei das Kraftübertragungselement (7) und das Kraftübernahmeelement (8) triebschlüssig zum Straffen des Sicherheitsgurtes in Gurtbandauszugsrichtung verbunden sind; und
- wenigstens einer Ausnehmung (4), in welcher die Kupplung mit ihren Kupplungselementen (1) im ausgerückten Zustand angeordnet ist;
**dadurch gekennzeichnet, dass**
- die Gurtspule ein erstes mit dem Kraftübernahmeelement (8) verbundenes Spulenteil (2) und ein zweites Spulenteil (3), welches am Gurtaufrollerrahmen (5) gegen Drehung in Gurtbandauszugsrichtung blockierbar ist, aufweist;
- ein Lastbegrenzer (10) für eine Lastbegrenzung bei überhöht beschleunigter Vorverlagerung eines mit dem Sicherheitsgurt angeschnallten Fahrzeuginsassen mit dem ersten und zweiten Spulenteil (2, 3) verbunden ist; und
- bei der Lastbegrenzung die Kupplungselemente (1) durch eine Relativdrehung, welche das erste Spulenteil (2) gegenüber dem zweiten Spulenteil (3) ausführt, in den ausgerückten Zustand bewegt sind.

2. Sicherheitsgurtaufroller nach Anspruch 1, **dadurch gekennzeichnet, daß** die Kupplungselemente (1) bei ihrer Bewegung in Ausrückrichtung durch das zweite Spulenteil (3) innerhalb einer bestimmten Wegstrecke im eingerückten Zustand gehalten sind.

3. Sicherheitsgurtaufroller nach Anspruch 1 oder 2, **dadurch gekennzeichnet, daß** das vom Strafferantrieb (6) erzeugte Drehmoment über ein Kraftübertragungselement (7) auf die Kupplungselemente (1) übertragbar ist, die im eingerückten Zustand in ein mit dem ersten Spulenteil (2) drehfest verbundenes Kraftübernahmeelement (8) kraftschlüssig eingreifen und im ausgerückten Zustand aus dem kraftschlüssigen Eingriff mit dem Kraftübernahmeelement (8) entfernt sind.

4. Sicherheitsgurtaufroller nach einem der Ansprüche 1 bis 3, **dadurch gekennzeichnet, daß** im ausgerückten Zustand die Kupplungselemente (1) auch außer Eingriff mit dem Kraftübertragungselement (7) sind.

5. Sicherheitsgurtaufroller nach einem der Ansprüche 1 bis 4, **dadurch gekennzeichnet, daß** die Kupplungselemente (1) im ausgerückten Zustand in Ausnehmungen (4), welche am zweiten Spulenteil (3) vorgesehen sind, bewegt sind.

6. Sicherheitsgurtaufroller nach einem der Ansprüche 1 bis 5, **dadurch gekennzeichnet, daß** die Kupplungselemente (1) sowie das Kraftübertragungselement (7) und das Kraftübernahmeelement (8) um die Spulenachse (9) drehbar sind.

7. Sicherheitsgurtaufroller nach einem der Ansprüche 1 bis 6, **dadurch gekennzeichnet, daß** die Kupplungselemente (1) als Wälzkörper ausgebildet sind.

8. Sicherheitsgurtaufroller nach einem der Ansprüche 1 bis 7, **dadurch gekennzeichnet, daß** im Normalbetrieb des Gurtaufrollers die Kupplungselemente (1) im eingerückten Zustand sind.

9. Sicherheitsgurtaufroller nach einem der Ansprüche 1 bis 8, **dadurch gekennzeichnet, daß** das Kraftübernahmeelement (8) eine Lagerwelle ist, auf welcher die beiden im Normalbetrieb drehfest miteinander verbundenen Spulenteile (2, 3), der Lastbegrenzer (10) und das Kraftübertragungselement (7) mitdrehend gelagert sind.

10. Sicherheitsgurtaufroller nach einem der Ansprüche 1 bis 9, **dadurch gekennzeichnet, daß** am zweiten Spulenteil (3) ein Kupplungsring (24) gelagert ist, welcher die Ausnehmungen (4), in welche die Kupplungselemente (1) im ausgerückten Zustand bewegt sind, aufweist.

11. Sicherheitsgurtaufroller nach Anspruch 10, **dadurch gekennzeichnet, daß** der Kupplungsring (24) eine im Normalbetrieb starre Verbindung, welche beim Straffen gelöst ist, mit dem zweiten Spulenteil (3) aufweist.

12. Sicherheitsgurtaufroller nach Anspruch 10 oder 11, **dadurch gekennzeichnet, daß** die Verbindung zwischen dem Kupplungsring (24) und dem zweiten Spulenteil (3) durch eine beim Beginn des Straffens ausgelöste Relativbewegung, insbesondere Drehung, des Kupplungsringes (24) gegenüber dem zweiten Spulenteil (3) lösbar ist.

13. Sicherheitsgurtaufroller nach Anspruch 12, **dadurch gekennzeichnet, daß** die Relativbewegung eine der Straffrichtung entgegengesetzte Bewegungsrichtung hat.

14. Sicherheitsgurtaufroller nach einem der Ansprüche 10 bis 13, **dadurch gekennzeichnet, daß** während des Straffens die Drehverbindung in Straffrichtung zwischen dem Kupplungsring (24) und dem zweiten Spulenteil (3) beibehalten ist.

15. Sicherheitsgurtaufroller nach einem der Ansprüche 10 bis 14, **dadurch gekennzeichnet, daß** der Kupplungsring (24) im Normalbetrieb durch Federkraft gegen einen beim Straffen aus der Wirklinie der Federkraft bewegbaren Anschlag (28) am zweiten Spulenteil (3) gedrückt ist.

16. Sicherheitsgurtaufroller nach einem der Ansprüche 10 bis 15, **dadurch gekennzeichnet, daß** die starre Verbindung zwischen dem Kupplungsring (24) und dem zweiten Spulenteil (3) durch Abreißstifte (32) gebildet ist.

17. Sicherheitsgurtaufroller nach einem der Ansprüche 10 bis 16, **dadurch gekennzeichnet, daß** die Kupplungselemente (1) im ausgerückten Zustand im Kupplungsring (24) in gegen den eingerückten Zustand gesperrter Position gehalten sind.

18. Sicherheitsgurtaufroller nach Anspruch 17, **dadurch gekennzeichnet, daß** die gesperrte Position durch Verdrehen des Kupplungsringes (24) gegenüber ein nach dem Gurtstraffen gegen Drehung blockiertes Teil, welches in der gesperrten Position die Ausnehmungen (4) zumindest soweit abdeckt, daß die Kupplungselemente (1) gegen eine Bewegung in die eingerückte Position gesperrt sind, gebildet ist.

19. Sicherheitsgurtaufroller nach Anspruch 18, **dadurch gekennzeichnet, daß** das die gesperrte Position herstellende Teil das Kraftübertragungselement (7) oder ein damit verbundenes Teil ist.

20. Sicherheitsgurtaufroller nach einem der Ansprüche 10 bis 19, **dadurch gekennzeichnet, daß** die Kupplungselemente (1) im ausgerückten Zustand in einer solchen radialen Position jeweils haltbar sind, daß sie durch eine vom Kupplungsring (24) übertragene Kraft in die Ausnehmungen (4) bewegbar sind.

21. Sicherheitsgurtaufroller nach einem der Ansprüche 10 bis 20, **dadurch gekennzeichnet, daß** nach dem Straffen der Kupplungsring (24) durch Federkraft so weit verdreht wird, daß die Ausnehmungen (4) mit den Kupplungselementen (1) in radialer Richtung ausgerichtet sind.

22. Sicherheitsgurtaufroller nach einem der Ansprüche 1 bis 21, **dadurch gekennzeichnet, daß** am Kraftübernahmeelement (8) Ausnehmungen (33) vorgesehen sind, in welche die Kupplungselemente (1) im eingerückten Zustand eingreifen.

23. Sicherheitsgurtaufroller nach einem der Ansprüche 1 bis 22, **dadurch gekennzeichnet, daß** die Ausnehmungen (33) des Kraftübertragungselementes (8) seitliche Anstiegsflanken aufweisen, durch die die Kupplungselemente (1) bei einer Drehung des Kraftübernahmeelements (8) gegenüber dem Kraftübertragungselement (7) in die radial ausgerichteten Ausnehmungen (4) des zweiten Spulenteils (3) bzw. des Kupplungsringes (24) in radialer Richtung bewegbar sind.

## Claims

1. A seat belt retractor, having
a belt reel mounted rotatably on a belt retractor frame (5), onto which reel a seat belt may be wound;
a tightener drive (6), which generates torque;
a force transmission element (7) connected with the tightener drive (6);
a force take-up element (8) non-rotatably connected with the belt reel (8);
a clutch, comprising clutch elements (1), which is directed into the engaged state when a torque is generated by the tightener drive (6), the force transmission element (7) and the force take-up element (8) being connected for drive so as to tighten the seat belt in the belt webbing extraction direction; and
at least one recess (4), in which the clutch is arranged with its clutch elements (1) when in the disengaged state;
**characterised in that**
the belt reel comprises a first reel portion (2) connected with the force take-up element (8) and a second reel portion (3), which may be blocked on the belt retractor frame (5) against rotation in the belt webbing extraction direction;
a load limiter (10) for limiting load in the event of excessively accelerated forward displacement of a vehicle occupant strapped in with the seat belt is connected with the first and second reel portions (2, 3); and
in the event of load limitation, the clutch elements (1) are moved into the disengaged state by relative rotation effected by the first reel portion (2) relative to the second reel portion (3).

2. A seat belt retractor according to claim 1, **characterised in that**, in the event of movement of the clutch elements (1) in the disengagement direction, said clutch elements are held in the engaged state by the second reel portion (3) over a certain distance.

3. A seat belt retractor according to claim 1 or claim 2, **characterised in that** the torque generated by the tightener drive (6) may be transmitted via a force transmission element (7) to the clutch elements (1), which, in the engaged state, engage in non-interlocking manner in a force take-up element (8) non-rotatably connected with the first reel portion (2) and, in the disengaged state, are removed from non-interlocking engagement with the force take-up element (8).

4. A seat belt retractor according to one of claims 1 to 3, **characterised in that**, in the disengaged state, the clutch elements (1) are also out of engagement with the force transmission element (7).

5. A seat belt retractor according to one of claims 1 to 4, **characterised in that**, in the disengaged state, the clutch elements (1) are moved into recesses (4) provided on the second reel portion (3).

6. A seat belt retractor according to one of claims 1 to 5, **characterised in that** the clutch elements (1) together with the force transmission element (7) and the force take-up element (8) are rotatable about the reel axis (9).

7. A seat belt retractor according to one of claims 1 to 6, **characterised in that** the clutch elements (1) take the form of rolling members.

8. A seat belt retractor according to one of claims 1 to 7, **characterised in that**, in normal operation of the belt retractor, the clutch elements (1) are in the engaged state.

9. A seat belt retractor according to one of claims 1 to 8, **characterised in that** the force take-up element (8) is a bearing shaft, on which the two reel portions (2, 3) connected together non-rotatably during normal operation, the load limiter (10) and the force transmission element (7) are mounted so as to rotate together with the bearing shaft.

10. A seat belt retractor according to one of claims 1 to 9, **characterised in that** a clutch ring (24) is mounted on the second reel portion (3), which clutch ring comprises the recesses (4) into which the clutch elements (1) are moved when in the disengaged state.

11. A seat belt retractor according to claim 10, **characterised in that**, in normal operation, the clutch ring (24) exhibits a rigid connection, released upon tightening, with the second reel portion (3).

12. A seat belt retractor according to claim 10 or 11, **characterised in that** the connection between the clutch ring (24) and the second reel portion (3) may be released by a relative movement, especially rotation, initiated when tightening begins, of the clutch ring (24) relative to the second reel portion (3).

13. A seat belt retractor according to claim 12, **characterised in that** the relative movement exhibits a direction of movement opposite to the tightening direction.

14. A seat belt retractor according to one of claims 10 to 13, **characterised in that** the rotational connection in the tightening direction between the clutch ring (24) and the second reel portion (3) is maintained during tightening.

15. A seat belt retractor according to one of claims 10 to 14, **characterised in that**, in normal operation, the clutch ring (24) is pressed as a result of resilience against a limit stop (28), movable out of the effective line of resilience during tightening, on the second reel portion (3).

16. A seat belt retractor according to one of claims 10 to 15, **characterised in that** the rigid connection between the clutch ring (24) and the second reel portion (3) is formed by tear-away pins (32).

17. A seat belt retractor according to one of claims 10 to 16, **characterised in that**, in the disengaged state, the clutch elements (1) are held in the clutch ring (24) in a position locked off from the engaged state.

18. A seat belt retractor according to claim 17, **characterised in that** the locked-off position is produced by turning the clutch ring (24) relative to a member blocked against rotation after belt tightening, which member covers the recesses (4) in the locked-off position at least insofar as the clutch elements (1) are locked with regard to movement into the engaged position.

19. A seat belt retractor according to claim 18, **characterised in that** the member producing the locked-off position is the force transmission element (7) or a member connected therewith.

20. A seat belt retractor according to one of claims 10 to 19, **characterised in that**, in the disengaged position, the clutch elements (10) may each be held in such a radial position that they may be moved into the recesses (4) by a force transmitted by the clutch ring (24).

21. A seat belt retractor according to one of claims 10 to 20, **characterised in that**, after tightening, the clutch ring (24) is turned as the result of resilience to such an extent that the recesses (4) are aligned with the clutch elements (1) in the radial direction.

22. A seat belt retractor according to one of claims 1 to 21, **characterised in that** there are provided on the force take-up element (8) recesses (33) in which the clutch elements (1) engage when in the engaged state.

23. A seat belt retractor according to one of claims 1 to 22, **characterised in that** the recesses (33) of the force take-up element (8) comprise sloping sides by means of which the clutch elements (1) may be moved in the radial direction into the radially aligned recesses (4) in the second reel portion (3) or the clutch ring (24) upon rotation of the force take-up element (8) relative to the force transmission element (7).

## Revendications

1. Enrouleur de ceinture de sécurité, comportant
une bobine de la ceinture agencée par rotation sur un châssis de l'enrouleur de la ceinture (5), sur laquelle peut être enroulée une ceinture de sécurité;
un élément de commande de tension (6), produisant un couple de rotation;
un élément de transmission de force (7) relié à l'élément de commande de tension (6);
un élément de prise de force (8) relié de manière résistante à la rotation à la bobine de la ceinture;
un accouplement comportant des éléments d'accouplement (1), entraîné en présence d'un couple de rotation produit par l'élément de commande de tension (6) dans un état engagé, l'élément de transmission de force (7) et l'élément de prise de force (8) étant reliés de manière fixe pour assurer la tension de la ceinture de sécurité dans le sens de déroulement de la sangle de la ceinture; et
au moins un évidement (4), dans lequel est agencé l'accouplement avec ses éléments d'accouplement (1) dans l'état dégagé;
**caractérisé en ce que**
la bobine de la ceinture comporte un premier élément de bobine (2) relié à l'élément de prise de force (8) et un deuxième élément de bobine (3) pouvant être bloqué sur le châssis de l'enrouleur de la ceinture (5) contre une rotation dans le sens du déroulement de la sangle de la ceinture;
un limiteur de la charge (10) destiné à assurer une limitation de la charge en cas d'un déplacement à accélération excessive vers l'avant d'un occupant de la voiture portant la ceinture de sécurité, est relié au premier et au deuxième élément de bobine (2, 3); et
les éléments d'accouplement (1) sont déplacés dans l'état dégagé lors d'une limitation de la charge, par suite d'une rotation relative du premier élément de bobine (2) par rapport aux deuxième élément de bobine (3).

2. Enrouleur de ceinture de sécurité selon la revendication 1, **caractérisé en ce que** lors de leur déplacement dans la direction d'un dégagement, les éléments d'accouplement (1) sont maintenus dans un état engagé par le deuxième élément de bobine (3) dans le cadre d'une distance définie.

3. Enrouleur de ceinture de sécurité selon les revendications 1 ou 2, **caractérisé en ce que** le couple de rotation produit par l'élément de commande de tension (6) peut être transmis par l'intermédiaire d'un élément de transmission de force (7) aux éléments d'accouplement (1), s'engageant de manière positive dans l'état engagé dans un élément de prise de force (8) relié de manière résistante à la rotation au premier élément de bobine
(2) et se dégageant dans l'état dégagé de l'engagement positif dans l'élément de prise de force (8).

4. Enrouleur de ceinture de sécurité selon l'une des revendications 1 à 3, **caractérisé en ce que** dans l'état dégagé, les éléments d'accouplement (1) sont aussi dégagés de l'élément de transmission de force (7).

5. Enrouleur de ceinture de sécurité selon l'une des revendications 1 à 4, **caractérisé en ce que** les éléments d'accouplement (1) sont déplacés dans l'état dégagé dans des évidements (4), agencés sur le deuxième élément de bobine (3).

6. Enrouleur de ceinture de sécurité selon l'une des revendications 1 à 5, **caractérisé en ce que** les éléments d'accouplement (1) ainsi que l'élément de transmission de force (7) et l'élément de prise de force (8) peuvent tourner autour de l'axe de la bobine (9).

7. Enrouleur de ceinture de sécurité selon l'une des revendications 1 à 6, **caractérisé en ce que** les éléments d'accouplement (1) ont la forme de rouleaux.

8. Enrouleur de ceinture de sécurité selon l'une des revendications 1 à 7, **caractérisé en ce que** pendant le fonctionnement normal de l'enrouleur de la ceinture les éléments d'accouplement (1) se trouvent dans l'état engagé.

9. Enrouleur de ceinture de sécurité selon l'une des revendications 1 à 8, **caractérisé en ce que** l'élément de prise de force (8) est constitué par un tourillon, sur lequel sont agencés les deux éléments de bobine (2, 3) reliés de manière résistante à la rotation pendant le fonctionnement normal, le limiteur de charge (10) et l'élément de transmission de force (7), de sorte à tourner avec celui-ci.

10. Enrouleur de ceinture de sécurité selon l'une des revendications 1 à 9, **caractérisé en ce que** le deuxième élément de bobine (3) comporte une bague d'accouplement (24), comportant les évidements (4) dans lesquels sont déplacés les éléments d'accouplement (1) dans l'état dégagé.

11. Enrouleur de ceinture de sécurité selon la revendication 10, **caractérisé en ce que** la bague d'accouplement (24) est reliée pendant le fonctionnement normal de manière rigide au deuxième élément de bobine (3), cette liaison étant supprimée lors de l'opération de tension.

12. Enrouleur de ceinture de sécurité selon les revendications 10 ou 11, **caractérisé en ce que** la liaison entre la bague d'accouplement (24) et le deuxième élément de bobine (3) peut être dégagée par un déplacement relatif entraîné lors du début de l'opération de tension, en particulier par une rotation de la bague d'accouplement (24) par rapport au deuxième élément de bobine (3).

13. Enrouleur de ceinture de sécurité selon la revendication 12, **caractérisé en ce que** le déplacement relatif se fait dans une direction opposée à la direction de la tension.

14. Enrouleur de ceinture de sécurité selon l'une des revendications 10 à 13, **caractérisé en ce que** la liaison par rotation dans la direction de la tension est maintenue pendant la tension entre la bague d'accouplement (24) et le deuxième élément de bobine (3).

15. Enrouleur de ceinture de sécurité selon l'une des revendications 10 à 14, **caractérisé en ce que** la bague d'accouplement (24) est pressée pendant le fonctionnement normal par une force élastique contre une butée (28) sur le deuxième élément de bobine (3), pouvant être déplacée hors de la ligne d'action de la force élastique lors de la tension.

16. Enrouleur de ceinture de sécurité selon l'une des revendications 10 à 15, **caractérisé en ce que** la liaison rigide entre la bague d'accouplement (24) et le deuxième élément de bobine (3) est formée par des goupilles de rupture (32).

17. Enrouleur d ceinture de sécurité selon l'une des revendications 10 à 16, **caractérisé en ce que** les éléments d'accouplement (1) sont retenus dans l'état dégagé dans une position bloquée contre l'état engagé dans la bague d'accouplement (24).

18. Enrouleur de ceinture de sécurité selon la revendication 17, **caractérisé en ce que** la position bloquée est établie par la rotation de la bague d'accouplement (24) par rapport à un élément bloqué contre la rotation après la tension de la ceinture, recouvrant dans la position bloquée les évidements (4) de sorte que les éléments d'accouplement (1) sont bloqués contre un déplacement dans la position engagée.

19. Enrouleur de ceinture de sécurité selon la revendication 18, **caractérisé en ce que** l'élément établissant la position bloquée est constitué par l'élément de transmission de force (7) ou par un élément qui y est relié.

20. Enrouleur de ceinture de sécurité selon l'une des revendications 10 à 19, **caractérisé en ce que** les éléments d'accouplement peuvent être retenus dans l'état dégagé dans une position radiale telle qu'ils peuvent être déplacés par une force transmise par la bague d'accouplement (24) dans les évidements (4).

21. Enrouleur de ceinture de sécurité selon l'une des revendications 10 à 20, **caractérisé en ce qu'**après l'opération de tension, la bague d'accouplement (24) est tournée par une force élastique de sorte que les évidements (4) sont orientés avec les éléments d'accouplement (1) dans la direction radiale.

22. Enrouleur de ceinture de sécurité selon l'une des revendications 1 à 21, **caractérisé en ce que** l'élément de prise de force (8) comporte des évidements (33), dans lesquels s'engagent les éléments d'accouplement (1) dans l'état engagé.

23. Enrouleur de ceinture de sécurité selon l'une des revendications 1 à 22, **caractérisé en ce que** les évidements (33) de l'élément de prise de force (8) comportent des flancs ascendants latéraux, par l'intermédiaire desquels les éléments d'accouplement (1) peuvent être déplacés dans les évidements à orientation radiale (4) du deuxième élément de bobine (3) ou de la bague d'accouplement (24) dans la direction radiale, lors d'une rotation de l'élément de prise de force (8) par rapport à l'élément de transmission de force (7).
